# EUROPEAN PATENT APPLICATION

(11) **EP 3 422 707 A1**
(43) Date of publication of application: **02.01.2019**
(21) Application number: 17178645.2
(22) Date of filing: 29.06.2017
(51) Int. Cl.: H04N 9/31

(54) **DISPLAY SYSTEM AND METHOD**

(71) Applicant: Vestel Elektronik Sanayi ve Ticaret A.S., 45030 Manisa (TR)
(72) Inventor: EGEMEN, Tufan, 45030 Manisa (TR)
(74) Representative: Ascherl, Andreas

(57) **Abstract**

The present invention provides a display system (100, 200, 300, 400) for displaying visual content (101, 201), the display system (100, 200, 300, 400) comprising a panel-based first display (103, 203, 303, 403), a projection-based display element (104) configured to provide a second display (105, 205) joined with the panel-based display element, and a control unit (102, 202, 302) configured to display in a first operating mode the visual content (101, 201) on the panel-based first display (103, 203, 303, 403) only and to jointly display in a second operating mode the visual content (101, 201) scaled on the panel-based first display (103, 203, 303, 403) and the second display (105, 205).

## Description

### TECHNICAL FIELD

The invention relates to a method for operating a display system and a display system for displaying visual content.

### BACKGROUND OF THE INVENTION

Although applicable to any electronic device with a display, the present invention will mainly be described in conjunction with TV sets.

Modern TV sets comprise a display panel for displaying visual content like e.g. images or videos. The sizes of display panels of modern TV sets may range from some inch, e.g. 10" in mobile TVs, to more than e.g. 55" or 65".

Users keep on demanding increasing display sizes. However, not all users do have the space available that is needed e.g. to set-up a 55" or 65" TV. Such users are therefore limited to smaller TVs that fit into the available space.

Accordingly, there is a need for providing larger display sizes for TVs.

### SUMMARY OF THE INVENTION

The present invention provides a display system with the features of claim 1 and a method for operating a display system with the features of claim 9.

Accordingly, it is provided:
A display system for displaying visual content, the display system comprising a panel-based first display, a projection-based display element configured to provide a second display joined with the panel-based display element, and a control unit configured to display in a first operating mode the visual content on the panel-based first display only and to jointly display in a second operating mode the visual content scaled on the panel-based first display and the second display.

Further, it is provided:
A method for controlling a display system with a panel-based first display and with a projection-based display element configured to provide a second display, the method comprising displaying in a first operating mode visual content on the panel-based first display only, and jointly displaying in a second operating mode the visual content scaled on the panel-based first display and the second display.

The present invention is based on the finding that it is not always possible to increase the panel size of a TV set to provide larger images, especially if no installation space is available.

The present invention therefore provides a display system that comprises two different types of displays. A panel-based first display is provided as in normal TV sets. This panel-based first display may be controlled by the control unit in the first operating mode, as if the display system would only comprise the panel-based first display. In the first operating mode the display system may therefore operate like e.g. a normal TV set.

However, if a user requests a larger image to be displayed, e.g. via the remote control of the display system, the control unit may switch to the second operating mode or back to the first operating mode. In the second operating mode the projection-based display element will be activated and provide a second display. The second display is arranged joined to the panel-based first display. The panel-based first display may e.g. be a display with a narrow frame. Such frames may be less than 1 mm wide. If the second display is arranged joined to the panel-based first display almost no transition will be visible between the panel-based first display and the second display.

The projection-based display element may e.g. comprise a projector that projects the second display onto a wall behind the display system. The projection-based display element will provide the second display joined with the panel-based first display. The term "joined" in this regard refers to the second display being visually positioned adjacent to the panel-based first display such that for a user or spectator the gap between the panel-based first display and the second display is minimized. Especially for display systems with very little depth and a user being positioned rather far from the display system, the second display on the wall and the panel-based first display will seem as being in one plane.

In the second operating mode the control unit will then stretch or scale the visual content, e.g. images or videos, such that the visual content is displayed stretched over the panel-based first display and the second display. The scaling or stretching may be performed by the control unit e.g. using interpolation algorithms, like e.g. nearest-neighbor interpolation, bilinear and bicubic algorithms, Sinc and Lanczos resampling, box sampling or the like.

The stretched content will then extend over the original panel-based first display. The second display will then serve as extension for the panel-based first display in the second operating mode.

The control unit may e.g. be the image processor of the display system that receives image data and processes the image data such that it may be displayed via the panel-based first display and/or the second display. Such an image processor may e.g. receive image data via an HDMI connection. It is understood, that the control unit may also be provided as separate entity or may be arranged in other processing elements of the display system. Such other processing elements may e.g. comprise a general purpose processor that e.g. performs network and so called "smart" functions, like e.g. in a Smart-TV. Such smart functions may include e.g. running applications that allow accessing the internet.

Further embodiments of the present invention are subject of the further subclaims and of the following description, referring to the drawings.

In an embodiment, the projection-based display element may comprise at least one first image projection device arranged on at least one horizontal side of the panel-based first display.

In today's media ecosystem a plurality of different image and video formats exist. Common formats are e.g. 4:3 and 16:9 for TV systems. Most of today's modern TV systems are provided with 16:9 panels. However, in cinemas other formats like e.g. 2,35:1 or 1,85:1 or the like are used. Modern data carriers like e.g. Blu-ray discs or Ultra HD Blu-ray discs will usually carry videos in the original cinema format. Such videos may therefore only be shown on 16:9 TVs with black bars in the upper and lower display regions.

With a first image projection device on one horizontal side or with a first image projection device on each one of the horizontal sides of the panel-based first display, the displayed image can be extended to one or both sides of the panel-based first display. The second display may therefore have only one section to one side of the panel-based first display or two sections, one on each side of the panel-based first display.

Therefore, the control unit may scale the images or videos such that the height of the image content, i.e. without black bars, matches the height of the panel-based first display. Without the second display, i.e. one or two side sections of the second display, sections on the sides of the images or videos would be cut by this scaling.

However, with the sections of the second display extending to one or both sides of the panel-based first display, these parts of the images or videos may also be shown.

Therefore, arranging the first image projection devices on the horizontal sides allows scaling widescreen content to use the full height of a panel-based first display even if this has a format that is less wide than the image or video format.

Arranging the first image projection devices on the horizontal sides in this context refers to the first image projection devices being arranged such that they project visual content to the horizontal sides of the panel-based first display. This includes the first image projection devices being arranged e.g. in a case of the display system, especially on the edges of the case of the display system. However, the first image projection devices may e.g. also be positioned centrally in the case of the display system and the light emitted by the first image projection devices may be guided by a respective optical arrangement to the horizontal sides of the panel-based first display.

In an embodiment, the projection-based display element may comprise at least one second image projection device arranged on the upper edge of the panel-based first display.

With the above described first image projection devices arranged on the horizontal sides, the shown image may be scaled to a width wider than the panel-based first display. With at least one second image projection device arranged on the upper or top edge of the panel-based first display the image may be extended in height above the dimension or height of the panel-based first display.

Especially in combination with the first image projection devices arranged on the horizontal sides of the panel-based first display, the second image projection devices may theoretically extend the shown image to any size. The panel-based first display may e.g. be positioned in the lower center position of such a display and the remaining part of the image may be projected by the first and second image projection devices.

It is understood, that the first and/or second image projection devices may e.g. project images higher and/or wider than the size of the panel-based first display. Therefore, no blanks will be seen in the corners of an increased display if the panel-based first display is positioned in the lower center of such an increased display.

In an embodiment, the projection-based display element may comprise at least one third image projection device arranged on the lower edge of the panel-based first display.

Modern TV sets are usually of light weight and may e.g. be installed on a wall. This means that there may not only be blank wall on the sides and over the panel-based first display. If the TV set is installed on a wall, there may instead also be blank wall under the panel-based first display.

With third image projection devices the display may therefore also be extended to the area below or under the panel-based first display.

The control unit may e.g. allow a user to set-up the first, second and third image projection devices according to the user's setup. The control unit may e.g. allow to configure which of the first, second and third image projection devices should be activated in the second operating mode and how the image content should be scaled or distributed on these image projection devices. The display system may in addition or as alternative also comprise sensors for detecting the free space around the edges of the display system. With such sensors the control unit may e.g. determine that the display system is arranged on a surface and only comprises a limited space to one side. With this knowledge the control unit may scale the visual content to the upper region and the side that is not covered.

In an embodiment, the image projection devices may comprise micro mirror based projection devices, also called DLP projectors.

DLP projectors may be arranged in narrow spaces and are therefore advantageously suited for installation in the housing of the display system, especially along the edges of such a housing. It is however understood that any other projection technology may also be used.

It is further understood that the projection devices may comprise any optical arrangement, e.g. comprising mirrors and lenses, as required to transform and to project the respective section of the visual content.

In an embodiment, the micro mirror based projection devices may comprise a LED based light source or a laser based light source.

LED or laser light sources require only little installation space. Such light sources may therefore be arranged in a housing of the display system without drastically increasing the size of the housing.

Further, the distance between the projection device and the wall will usually not be very large, e.g. only some centimeters. Therefore, light sources with reduced intensity may be used with the image projection devices.

In an embodiment, the display system may comprise a position determining device configured to determine a position of a user in front of the display system. The control unit may be configured to position the second display according to the determined position of the user.

The optical parallax effect may make the second display move around the panel-based first display when the user moves. This effect increases with the distance between the panel-based first display and the second display surface, e.g. a wall.

This effect may therefore be reduced by mounting the display system directly on the wall.

By determining the position of the user it is possible for the control unit to compensate the parallax effect and e.g. move the second display or sections of the second display accordingly.

If for example more than one user are detected in front of the display system, the parallax effect compensation may be deactivated in the control unit.

The position determining device may e.g. comprise a camera combined with a respective detection algorithm in the control unit. If a camera is already present in e.g. a smart TV, that camera may also serve as the position determining device. It is understood, that other sensors, like e.g. ultra sound or infrared sensors or the like may also be used for determining user's positions.

In another embodiment, the display system may comprise a position sensor for determining the relative position of the display system relative to a wall behind the display system. The control unit may be configured to scale the visual content based on the determined relative position.

The control unit may e.g. always assume that the panel-based first display is arranged parallel to the wall behind the display system and scale the visual content accordingly. However, if the panel-based first display is arranged in an angle to the wall, the projection-based display elements will also be arranged in an angle to the wall. Since usually the optical arrangement of the projection-based display elements may be tuned for a wall parallel to the panel-based first display, in this case the image would be distorted or skewed.

By determining the relative position of the display system to the wall behind the display system the control unit may determine the position of the surface that will form the second display. If this surface is not parallel to the panel-based first display, the control unit may take this into account when scaling the visual content. The control unit may e.g. perform a de-distortion or de-skewing of the visual content according to the relative position of the panel-based first display to the wall. The de-distortion or de-skewing may e.g. be performed digitally by the control unit using algorithms for performing respective geometric modifications of the visual content.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of a display system according to the present invention;
Fig. 2 shows a block diagram of another embodiment of a display system according to the present invention;
Fig. 3 shows a block diagram of another embodiment of a display system according to the present invention;
Fig. 4 shows a block diagram of another embodiment of a display system according to the present invention;
Fig. 5 shows a flow diagram of an embodiment of a method according to the present invention; and
Fig. 6 shows a flow diagram of another embodiment of a method according to the present invention.

In the figures like reference signs denote like elements unless stated otherwise.

### DETAILED DESCRIPTION OF THE DRAWINGS

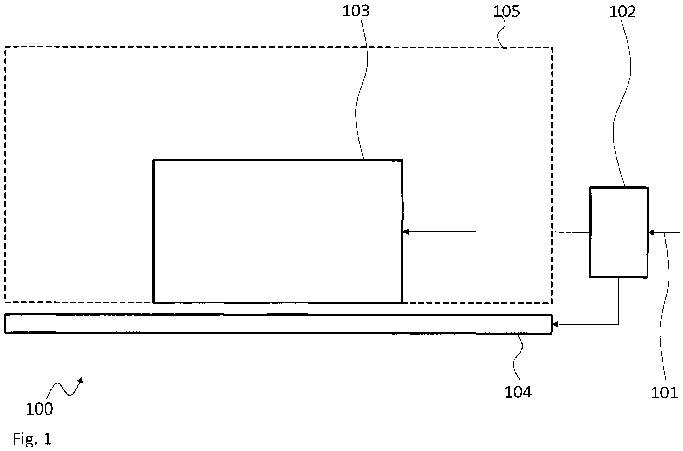

Fig. 1 shows a block diagram of a display system 100. The display system 100 comprises a control unit 102 that is coupled to a panel-based first display 103 and a projection-based display element 104. The panel-based first display 103 may be a standard display panel, like e.g. a TFT or OLED panel. Although not shown, the panel-based first display 103 may e.g. be arranged in a TV set and be the main panel of the TV set. The projection-based display element 104 in contrast may be an additional display element that does not provide a display panel. Instead the projection-based display element 104 may use a flat surface like e.g. a wall behind the display system 100 to project visual content onto that flat surface.

Although shown as separate device, it is understood that the projection-based display element 104 may be integrated in the TV set together with the panel-based first display 103. The projection-based display element 104 may e.g. comprise one or more light sources and a number, e.g. one or more, of image forming elements, like e.g. TFT matrices or DLPs.

The control unit 102 may drive the panel-based first display 103 and the projection-based display element 104 in two different operating modes.

In the first operating mode the control unit 102 receives visual content 101 and displays the visual content 101 only on the panel-based first display 103. In this first operating mode the display system 100 may be seen as a standard TV set with only the panel-based first display 103. The projection-based display element 104 may be completely deactivated in the first operating mode.

In the second operating mode the control unit 102 uses the panel-based first display 103 and the projection-based display element 104 that creates a second display 105 to display the visual content 101. In this second operating mode the display system 100 may be seen as a combination of a TV set with the panel-based first display 103 that is expanded by the second display 105 that is provided by the projection-based display element 104.

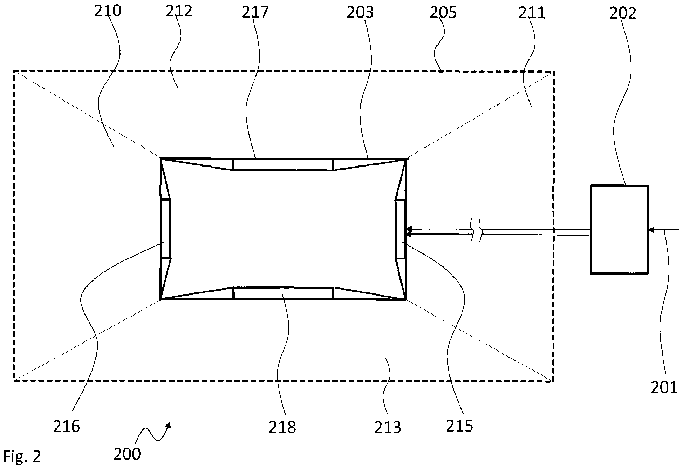

The control unit 102 may e.g. scale the visual content 101 and display the visual content 101 scaled or stretched over the panel-based first display 103 and the second display 105. The projection-based display element 104 may e.g. comprise different projection devices for different segments of the second display 105 as may be seen e.g. in Fig. 2. If the projection-based display element 104 however is positioned in front of the panel-based first display 103, the projection-based display element 104 may e.g. comprise a single projection device with a mask that masks out the panel-based first display 103. The projection-based display element 104 may then e.g. receive the visual content 101 without any modifications from the control unit 102. The panel-based first display 103 however will still receive only a scaled or stretched section of the visual content 101 that corresponds to the image section that is covered by the panel-based first display 103.

Fig. 2 shows a block diagram of another display system 200. The display system 200 is based on the display system 100 and also comprises a control unit 202, a panel-based first display 203 and a projection-based display element. The projection-based display element however is not separately shown. Instead the projection-based display element comprises (and is shown as) two first image projection devices 215, 216, one second image projection device 217, and a third image projection device 218. The first, second and third image projection devices 215, 216, 217, 218 are shown as arranged at the edges of the panel-based first display 203. The first image projection device 215 is arranged on the right edge, the first image projection device 216 is arranged on the left edge, the second image projection device 217 is arranged on the top or upper edge and the third image projection device 218 is arranged on the lower or bottom edge. It is understood, that the first, second and third image projection devices 215, 216, 217, 218 on the four edges of the panel-based first display 203 are just exemplarily shown and that another embodiment of the display system 200 may e.g. comprise less image projection devices. For example the second image projection device 217 and/or the third image projection device 218 and/or one of the first image projection devices 215, 216 could be omitted. Further, it is understood, that the first, second and third image projection devices 215, 216, 217, 218 may each comprise separate projectors along the respective edge of the panel-based first display 203.

In Fig. 2 it can be seen that every one of the first, second and third image projection devices 215, 216, 217, 218 covers a specific second display section 210, 211, 212, 213 on the respective side of the panel-based first display 203.

The control unit 202 may therefore separate the visual content 201 into respective sections and stretch the single sections such that they match the specific second display section 210, 211, 212, 213 and may be projected by the first, second and third image projection devices 215, 216, 217, 218. It may also be possible for a user to e.g. select the first, second and third image projection devices 215, 216, 217, 218 that should be used to extend the image of the panel-based first display 203. The user may e.g. chose to use only the first and second image projection devices 215, 216, 217. This may be the case e.g. if the display system 200 is arranged on a shelf or the like.

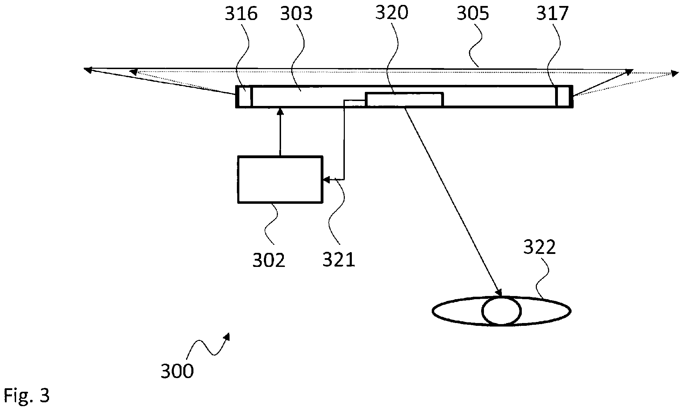

Fig. 3 shows a block diagram of another display system 300. It is understood, that the display system 300 may comprise any of the features shown and explained above for the display system 100 and/or the display system 200. The display system 300 further comprises a position determining device 320. The position determining device 320 determines the position 321 of a user 322 in front of the panel-based first display 303. The control unit 302 then uses the knowledge about this position 321 to compensate the optical parallax effect. It is understood, that this function may be deactivated if more than one user is detected in front of the panel-based first display 303.

To compensate the parallax effect the control unit 302 may e.g. move the second display 305 accordingly and e.g. add blank sections where necessary. In Fig. 3 a centered second display 305 is shown with dotted lines and a translated second display 305 is shown with solid lines. The second display 305 may e.g. be created by first image projection devices 315, 316.

Although only shown for a translational correction of the parallax effect, it is understood that the same may be applied for a vertical parallax effect.

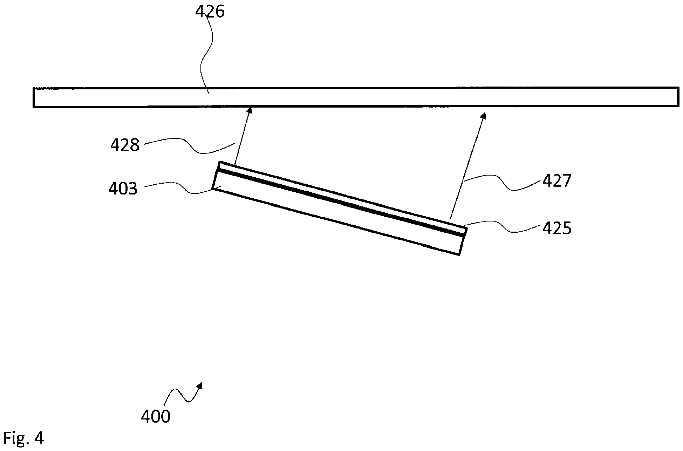

Fig. 4 shows a block diagram of another display system 400. The display system 400, especially the panel-based first display 403 is arranged before a wall 426. It can be seen that there is an angle between the plane of the panel-based first display 403 and the wall 426. To compensate for this angle the display system 400 comprises a position sensor 425 that determines the angle between the panel-based first display 403 and the wall 426. In Fig. 4 the position sensor 425 is shown as a distance sensor that calculates the angle based on two distances between the panel-based first display 403 and the wall 426. The position sensor 425 may e.g. comprise ultra-sound based distance sensors or the like and calculate the angle based on the difference between the distances 427, 428 and the distance between the points at which the distances 427, 428 are measured.

With an angle between the panel-based first display 403 and the wall 426 the image shown in the second operating mode would be distorted without any counter measures. The control unit (not explicitly shown) may therefore perform a de-distortion of the visual content that has to be displayed based on the detected angle.

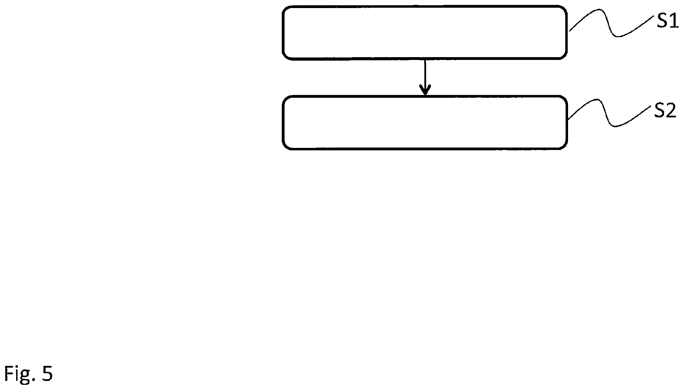

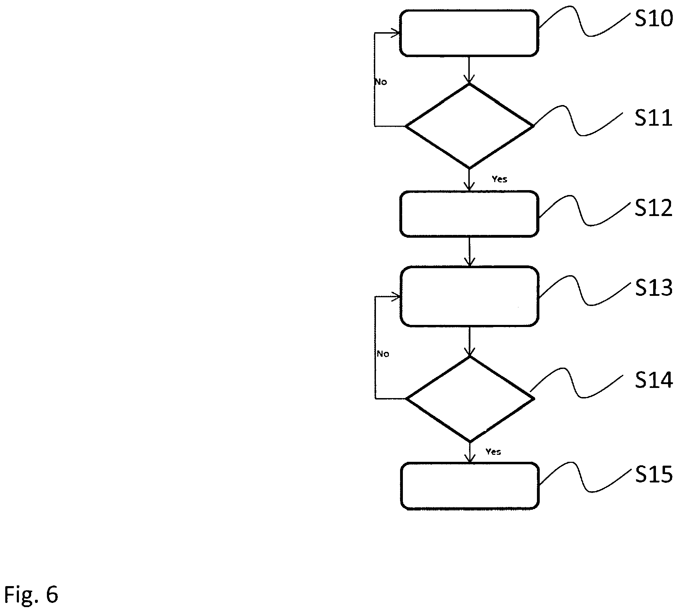

For sake of clarity the reference signs used above for the description of the apparatus based Figs. 1 - 4 will also be used below for the description of method based Figs. 5 and 6.

Fig. 5 shows a flow diagram of a method for controlling a display system 100, 200, 300, 400 with a panel-based first display 103, 203, 303, 403 and with a projection-based display element 104 configured to provide a second display 105, 205.

The method comprises displaying S1 in a first operating mode visual content 101, 201 on the panel-based first display 103, 203, 303, 403 only, and jointly displaying S2 in a second operating mode the visual content 101, 201 scaled on the panel-based first display 103, 203, 303, 403 and the second display 105, 205.

Jointly displaying (S2) may comprise projecting visual content 101, 201 beside the panel-based first display 103, 203, 303, 403 on at least one horizontal side of the panel-based first display 103, 203, 303, 403. Jointly displaying S2 may especially comprise projecting visual content 101, 201 above the upper edge of the panel-based first display 103, 203, 303, 403 and/or projecting visual content 101, 201 below the lower edge of the panel-based first display 103, 203, 303, 403.

Jointly displaying S2 may comprise projecting at least part of the visual content 101, 201 via micro mirror based projection devices. The micro mirror based projection devices may comprise a LED light source or a laser light source for generating light.

The method may also comprise determining a position of a user in front of the display system 100, 200, 300, 400, and positioning the visual content 101, 201 displayed via the second display 105, 205 according to the determined position of the user.

In addition, the method may comprise determining the relative position of the display system 100, 200, 300, 400 relative to a wall behind the display system 100, 200, 300, 400, wherein when jointly displaying the visual content 101, 201 may be scaled based on the determined relative position.

Fig. 6 shows a flow diagram of another method for controlling a display system 100, 200, 300, 400 with a panel-based first display 103, 203, 303, 403 and with a projection-based display element 104 configured to provide a second display 105, 205.

The method starts in step S10 with a normally working display system 100, 200, 300, 400, i.e. only the panel-based first display 103, 203, 303, 403 is activated in the first operating mode. In step S11 it is verified if a user enabled the second operating mode e.g. via a remote control. If the used did enable the second operating mode, in step S12 the projection-based display element 104 is activated and a second display 105, 205 is created. In step S13 the visual content 101, 201 is scaled according to the new display size and displayed. In step S14 it is verified if the user deactivated the second operating mode. If not, the content is continuously scaled. However, if the user did deactivate the second operating mode and return to the first operating mode, the projection-based display element 104 is deactivated in step S15 and the display system 100, 200, 300, 400 is operated in the first operating mode.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

Thus, the present invention provides a display system 100, 200, 300, 400 for displaying visual content 101, 201, the display system 100, 200, 300, 400 comprising a panel-based first display 103, 203, 303, 403, a projection-based display element 104 configured to provide a second display 105, 205 joined with the panel-based display element, and a control unit 102, 202, 302 configured to display in a first operating mode the visual content 101, 201 on the panel-based first display 103, 203, 303, 403 only and to jointly display in a second operating mode the visual content 101, 201 scaled on the panel-based first display 103, 203, 303, 403 and the second display 105, 205.

### List of reference signs

- 100, 200, 300, 400: display system
- 101,201: visual content
- 102, 202, 302: control unit
- 103, 203, 303, 403: panel-based first display
- 104: projection-based display element
- 105,205: second display
- 210,211,212,213: second display section
- 215, 216, 316, 317: first image projection device
- 217: second image projection device
- 218: third image projection device
- 320: position determining device
- 321: position
- 322: user
- 425: position sensor
- 426: wall
- 427,428: distance

## Claims

1. Display system (100, 200, 300, 400) for displaying visual content (101, 201), the display system (100, 200, 300, 400) comprising:
a panel-based first display (103, 203, 303, 403),
a projection-based display element (104) configured to provide a second display (105, 205) joined with the panel-based display element, and
a control unit (102, 202, 302) configured to display in a first operating mode the visual content (101, 201) on the panel-based first display (103, 203, 303, 403) only and to jointly display in a second operating mode the visual content (101, 201) scaled on the panel-based first display (103, 203, 303, 403) and the second display (105, 205).

2. Display system (100, 200, 300, 400) according to claim 1, wherein the projection-based display element (104) comprises at least one first image projection device (215, 216, 316, 317) arranged on at least one horizontal side of the panel-based first display (103, 203, 303, 403).

3. Display system (100, 200, 300, 400) according to any of the preceding claims, wherein the projection-based display element (104) comprises at least one second image projection device (217) arranged on the upper edge of the panel-based first display (103, 203, 303, 403).

4. Display system (100, 200, 300, 400) according to any of preceding claims, wherein the projection-based display element (104) comprises at least one third image projection device (218) arranged on the lower edge of the panel-based first display (103, 203, 303, 403).

5. Display system (100, 200, 300, 400) according to any of claims 2 to 4, wherein the image projection devices comprise micro mirror based projection devices.

6. Display system (100, 200, 300, 400) according to claim 5, wherein the micro mirror based projection devices comprise a LED based light source or a laser based light source.

7. Display system (100, 200, 300, 400) according to any of the preceding claims, comprising a position determining device (320) configured to determine a position (321) of a user (322) in front of the display system (100, 200, 300, 400), wherein the control unit (102, 202, 302) is configured to position the second display (105, 205) according to the determined position (321) of the user (322).

8. Display system (100, 200, 300, 400) according to any of the preceding claims, comprising a position sensor (425) configured to determine the relative position of the display system (100, 200, 300, 400) relative to a wall (426) behind the display system (100, 200, 300, 400), wherein the control unit (102, 202, 302) is configured to scale the visual content (101, 201) based on the determined relative position.

9. Method for controlling a display system (100, 200, 300, 400) with a panel-based first display (103, 203, 303, 403) and with a projection-based display element (104) configured to provide a second display (105, 205), the method comprising:
displaying (S1) in a first operating mode visual content (101, 201) on the panel-based first display (103, 203, 303, 403) only, and
jointly (S2) displaying in a second operating mode the visual content (101, 201) scaled on the panel-based first display (103, 203, 303, 403) and the second display (105, 205).

10. Method according to claim 9, wherein jointly displaying comprises projecting visual content (101, 201) beside the panel-based first display (103, 203, 303, 403) on at least one horizontal side of the panel-based first display (103, 203, 303, 403).

11. Method according to any of the preceding claims 9 and 10, wherein jointly displaying comprises projecting visual content (101, 201) above the upper edge of the panel-based first display (103, 203, 303, 403); and/or
wherein jointly displaying comprises projecting visual content (101, 201) below the lower edge of the panel-based first display (103, 203, 303, 403).

12. Method according to any of claims 9 to 11, wherein jointly displaying comprises projecting at least part of the visual content (101, 201) via micro mirror based projection devices.

13. Method according to claim 12, wherein projecting comprises generating light with a LED based light source or a laser based light source.

14. Method according to any of the preceding claims 9 to 13, comprising determining a position of a user in front of the display system (100, 200, 300, 400), and positioning the visual content (101, 201) displayed via the second display (105, 205) according to the determined position of the user.

15. Method according to any of the preceding claims 9 to 14, comprising determining the relative position of the display system (100, 200, 300, 400) relative to a wall behind the display system (100, 200, 300, 400), wherein when jointly displaying the visual content (101, 201) is scaled based on the determined relative position.
